# EUROPÄISCHE PATENTSCHRIFT

(11) **EP 0 417 520 B1**
(45) Veröffentlichungstag und Bekanntmachung des Hinweises auf die Patenterteilung: **01.06.1994**
(21) Anmeldenummer: 90116142.2
(22) Anmeldetag: 23.08.1990
(51) Int. Cl.: B09B 3/00

(54) **Verfahren und Vorrichtung zur umweltschonenden Beseitigung von umweltgefährdenden Rückständen**
Method and apparatus for the pollution-free disposal of environment-detrimental residues
Procédé et dispositif d'élimination non polluante des résidus nuisibles à l'environnement

(30) Priorität: 15.09.1989 DE 3930899
(43) Veröffentlichungstag der Anmeldung: 20.03.1991
(73) Patentinhaber: Aug. Horn Söhne Inh. Helmut Horn KG, D-95703 Plössberg (DE)
(72) Erfinder: Horn, Helmut,, D-8591 Plössberg, (DE); Horn, Helmut,, D-8591 Plössberg, (DE)
(74) Vertreter: Matschkur, Götz, Lindner Patent- und Rechtsanwälte

(56) Entgegenhaltungen:
- EP-A- 0 294 362
- EP-A- 0 313 902
- EP-A- 0 330 872
- DE-A- 2 436 296
- DE-A- 3 206 984
- DE-A- 3 637 397
- US-A- 4 831 943
- PATENT ABSTRACTS OF JAPAN vol. 3, no. 108 (M-72) 11 September 1979,& JP-A-54 84352 (KUBOTA TEKKO KK) 05 Juli 1979
- PATENT ABSTRACTS OF JAPAN vol. 5, no. 10 (M-51)(682) 22 Januar 1981,& JP-A-55 140025 (HITACHI PLANT KENSETSU KK) 01 November 1980

## Beschreibung

Die Erfindung bezieht sich auf ein Verfahren zur umweltschonenden Beseitigung von umweltgefährdenden Rückständen, insbesondere von Klärschlamm, Filterstaub, Flugasche, Schlacken und dergleichen durch Zusammenschmelzen mit Zuschlagstoffen, sowie eine Vorrichtung zur Durchführung dieses Verfahrens.

Zur Beseitigung hochradioaktiver Stoffe ist bereits seit langem das sog. Einschmelzen der radioaktiven Substanzen im Einsatz, indem relativ geringe Mengen radioaktiven Materials in große Glasblöcke eingeschmolzen werden. Dieses Verfahren ist schon wegen der teuren verwendeten Glassubstanzen, bezogen auf die geringen Mengen radioaktiven Materials, sehr teuer, so daß es sich für die Verwendung zur Beseitigung von als Massenware anfallenden schädlichen Substanzen von vornherein nicht eignet.

Die US-A-4632690 beschreibt ein Verfahren, bei welchem die umweltgefährdenden Rückstände mit Rohmaterialien eines glasbildenden Gemenges vermischt und in einem Ofen derart miteinander verschmolzen werden, daß die umweltgefährdenden Rückstände in die glasartige Masse eingebunden sind. Es handelt sich dabei also im wesentlichen um das gleiche Verfahren, wie vorstehend bei der Einschmelzung hochradioaktiver Stoffe beschrieben wurde, wobei angesichts der notwendigen Verwendung teurer Rohstoffe zur Glasbildung auch das Verfahren nach dieser US-Patentschrift sich allenfalls für spezielle Rückstände eignet, die größtenteils verbrennen.

Darüber hinaus ist speziell zur Beseitigung von Flugasche aus Stahlwerkentstaubungsanlagen in der Deutschen Offenlegungsschrift DE-A-36 37 397 bereits vorgeschlagen worden, den Staub in die flüssige Schlacke im oder mit dieser erkalten zu lassen, wobei es infolge der Hitze der Schlacke und deren chemischer Zusammensetzung zu einer Verglasung der Rückstände kommt.

Dieses Verfahren ist ersichtlich nur speziell für die Entsorgung des Filterstaubes von Stahlwerken geeignet, da es ja voraussetzt, daß zur Entsorgung eines schädlichen Rückstandes flüssige Schlacke im oder hinter dem Lichtbogenofen zur Verfügung steht.

Der Erfindung liegt daher die Aufgabe zugrunde, ein allgemeines und weitgehend standortunabhängig anwendbares Verfahren zur Beseitigung umweltgefährdender Rückstände zu schaffen, insbesondere auch zur Beseitigung von Klärschlamm, welches darüber hinaus auch mit vertretbar niedrigen Kosten arbeiten kann.

Zur Lösung dieser Aufgabe ist erfindungsgemäß vorgesehen, daß die getrockneten Rückstände mit fester Hochofenschlacke oder anderen Abfallstoffen gemischt und homogenisiert in einem zweigeteilten Schmelzofen mit einem ersten Schmelzbecken und einem zweiten Schmelzbecken bei Temperaturen zwischen 1350°C und 1600°C zu einer glasartigen Masse, in die die Schadstoffe eingebunden sind, verschmolzen und über einen Überlauf kontinuierlich abgezogen werden.

Das erfindungsgemäße Schmelzofenverfahren ermöglicht gegenüber dem speziellen Entsorgungsverfahren für Stahlwerkentstaubungsanlagen nicht nur einen kontinuierlichen Betrieb, sondern es ist auf diese Art und Weise auch möglich, nicht nur Stäube, sondern insbesondere auch Klärschlamm und andere umweltgefährdenden Rückstände umweltschonend zu entsorgen.

Dieses Schmelzofenverfahren ist ortsunabhängig.

Die aus diesem Prozeß abgezogene glasartige Masse kann nicht nur problemlos gelagert werden, sondern eignet sich darüber hinaus ihrerseits wieder als Rohstoff für weitere Produkte. Neben der Möglichkeit, die glasartige Masse nach einem Vermahlen und Aufbereiten als Zementzuschlagstoff zu verwenden, kann sie auch im Rahmen der Bauindustrie, sei es für den Unterbau bei Straßen, sei es auch als wertvolle Bausteine oder Platten, verwendet werden.

Demzufolge kann beim erfindungsgemäßen Verfahren eine unterschiedliche Nachaufbereitung des über den Überlauf kontinuierlich abgezogenen Schmelzproduktes vorgesehen sein, und zwar entweder in der Weise, daß die abgezogene Masse in Formen zur Bildung von Blöcken, Bausteinen oder Platten gegossen und bis zum Erstarren abgekühlt wird, oder aber, indem man die abgezogene Masse in kaltem Wasser unter Bildung von Fritten abschreckt.

Das erfindungsgemäße Schmelzofenverfahren kommt mit relativ geringen Mengen der Zuschlagstoffe bezogen auf die zu entsorgenden umweltgefährdenden Rückstände aus.

Beispielsweise ist bei der Entsorgung von Klärschlamm unter Verwendung von Hochofenschlacke ein Verhältnis von 1 : 1 ausreichend, wobei man allerdings vorzugsweise das Verhältnis Klärschlamm zu Hochofenschlacke bis zu 1 : 3 oder in Ausnahmefällen auch darüber wählen wird.

Das Verhältnis hängt wesentlich davon ab, in welchem Ausmaß Auswaschungen der umweltgefährdenden Substanz, insbesondere der Schwermetalle im Klärschlamm, vermieden werden sollen und vor allen Dingen auch davon, was mit der verglasten Masse geschehen soll, d.h. ob sie nur in einer deponiefähigen Form vorliegen soll oder ob man sie zu wertvollen wiederverwendbaren Bausteinen, wie beispielsweise Gehwegplatten oder Wandverkleidungen, weiterverarbeiten will.

Das erfindungsgemäße Schmelzofenverfahren hat darüber hinaus den großem Vorteil, daß es auch das Auftreten zusätzlicher oder sekundärer Umweltbeeinträchtigungen durch das Austreten von Gasen vermeiden kann, die beim Verglasen des Klärschlamms oder der Flugasche mit den zuschlagstoffen entstehen. So sind in vielen Fällen Chloride oder Schwefelverbindungen im Klärschlamm oder der Flugasche enthalten, wobei die Chloride ganz und die Sulfide zumindest teilweise beim Schmelzen ausgegast werden.

Die in dem erfindungsgemäßen Schmelzofenverfahren entstehenden Abgase werden durch, den Anforderungen der TA-Luft genügend, Filtern und Wäschern zugeführt, die die Abgase von festen Bestandteilen reinigen und Schadgase, wie z.B. Cl₂, SO₂, auswaschen und neutralisieren. Die festen Bestandteile aus den Filtern werden dem Schmelzprozeß wieder zugeführt.

Zur Durchführung des erfindungsgemäßen Schmelzofenverfahrens eignet sich eine Vorrichtung mit einem geschlossenen Schmelzofen mit zwei Schmelzbecken, mit einem in einer Stirnwand oberhalb des Überlauf-Niveaus liegenden Rohstoffeinlaß und einem vorzugsweise in der gegenüberliegenden Stirnwand angeordneten Auslaß, sowie mit einer elektrischen Heizung in beiden Schmelzbecken und einer zusätzlichen Oberflammen-Beheizung im Oberofen des zweiten Schmelzbeckens, wie sie in der EP-A2-0317551 beschrieben ist, wobei erfindungsgemäß vorgesehen ist, daß der Oberofen des zweiten Schmelzbeckens mit dem Oberofen des ersten Schmelzbeckens über eine Verbindungsöffnung verbunden ist.

Erst durch diese doppelten Heizeinrichtungen, mit die Schmelzofenwand durchsetzenden Heizelektroden im Schmelzbeckenbereich, d.h. im Bereich unterhalb des Überlauf-Niveaus, und die in jedem Fall erforderliche Oberflammen-Beheizung durch Öl oder Gas, läßt sich ein problemloses Verschmelzen von Klärschlamm mit Hochofenschlacke in einem Ausmaß erreichen, welches auch entsprechend große Durchsatzmengen zuläßt, so daß mit Hilfe dieses Schmelzofenverfahrens der Klärschlammanfall einer Großkläranlage bewältigt werden kann.

In Ausgestaltung der Erfindung kann dabei weiter vorgesehen sein, daß die Abzugsöffnung, der ein Filter und ein Wäscher nachgeordnet sind, in einer der anderen Seitenwände des geschlossenen Schmelzofens angeordnet ist.

Schließlich liegt es auch noch im Rahmen der Erfindung, die Auslaßöffnung über einen abgedeckten Speiser mit dem beanstandeten Überlauf zu verbinden, wobei im Bereich des Speiserkanals sowohl eine Oberflammenbeheizung als auch eine Elektrodenbeheizung vorgesehen ist. In diesem Bereich findet eine zusätzliche Homogenisierung in der Temperatur der glasartigen Masse statt, so daß insbesondere bei der Weiterverwendung zu Baustoffen qualitativ stabile Produkte erzielt werden können.

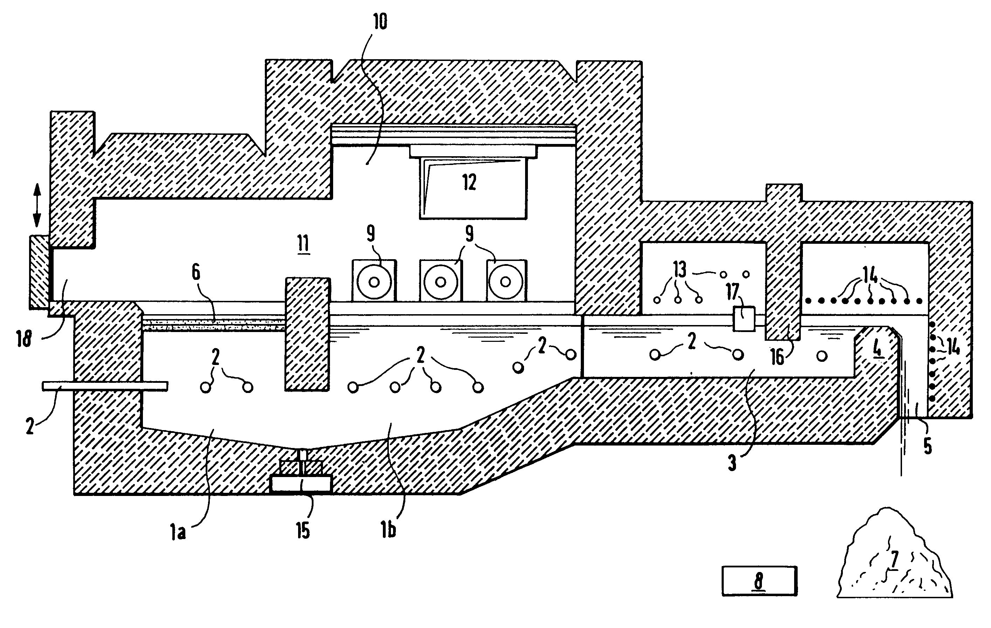

Weitere Vorteile, Merkmale und Einzelheiten der Erfindung ergeben sich aus der nachfolgenden Beschreibung eines Ausführungsbeispieles anhand der Zeichnung. Diese zeigt einen schematischen Schnitt durch einen Schmelzofen zur Durchführung des erfindungsgemäßen Verfahrens.

Der in der Figur schematisch dargestellte Schmelzofen umfaßt zwei Schmelzbecken 1a, 1b, mit die Seitenwand durchsetzenden Heizelektroden 2. Vom Schmelzteil 1b wird die glasartige Masse mittels einem Speiserkanal 3 zum Überlauf 4 geführt und tritt dort durch eine Austragsöffnung 5 nach außen.

Da diese glasartige Masse eine Flüssigkeit darstellt, die auch, genauso wie sulfatreiche Gläser, eine begrenzte Löslichkeit von Sulfaten aufweist, besteht die Möglichkeit der Glasgallenbildung auf der Schmelzbadoberfläche. Diese Reaktion wird noch durch schwach reduzierende oder gar oxidierende Schmelzen verstärkt.

Damit daher beim Auftreten von Glasgalle das Produkt nicht verunreinigt wird, wird diese noch vor dem Überlauf 4 von einem Skimmer 16 zurückgehalten und über eine seitliche Öffnung 17 abgezogen.

Durch Einbringen der Masse in kaltes Wasser wird diese zu Fritten 7 oder oder durch Eingießen in Formen zu Bausteinen 8 verarbeitet.

Das erste Schmelzbecken 1a wird nur über elektrische Energie beheizt, die direkt über Elektroden in die Schmelze eingeführt wird. Das hat den Vorteil, daß sich in diesen Schmelzteile eine geschlossene Aufgabegutdecke 6 ausbildet, die eine Verstaubung verhindert. Das Aufgabegut wird durch eine Einlegeöffnung 18 in den Ofen eingebracht.

Das bei Temperaturen zwischen 1500°C und 1600°C abschmelzende Material wird dann durch einen Durchfluß in das zweite Schmelzbecken 1b geführt. Dieses zweite Schmelzbecken 1b ist sowohl direkt mit Elektroden 2 beheizt als auch durch Brenner 9 im Oberofen.

In diesem Oberofen 10 sollen sowohl die Ausdampfungen aus dem Schmelzbecken 1a, die über die Verbindungsöffnung 11 in den Oberofen 10 gelangen, als auch Läutergase aus dem Schmelzbecken 1b bei 1350°C - 1600°C vollständig verbrannt werden.

Diese Abgase werden dann über einen Abzug 12 Filtern oder/und Wäschern zugeführt, die die Abgase nach den Anforderungen der TA-Luft reinigen. Die entstehenden Filterstäube werden dem Schmelzprozeß wieder zugeführt. Eine Aufkonzentrierung ist nicht zu erwarten.

Metalle, die sich während der kontinuierlichen Schmelze bilden, werden über eine Dränageöffnung 15 am Schmelzwannenboden abgezogen.

## Patentansprüche

1. Verfahren zur umweltschonenden Beseitigung von umweltgefährdenden Rückständen, insbesondere von Klärschlamm, Filterstaub, Flugasche, Schlacken und dergleichen durch Zusammenschmelzen mit Zuschlagstoffen, dadurch gekennzeichnet, daß die getrockneten Rückstände mit fester Hochofenschlacke oder anderen Abfallstoffen gemischt und homogenisiert in einem zweigeteilten Schmelzofen mit einem ersten Schmelzbecken (1a) und einem zweiten Schmelzbecken (1b) bei Temperaturen zwischen 1350°C und 1600°C zu einer glasartigen Masse, in die die Schadstoffe eingebunden sind, verschmolzen und über einen Überlauf (4) kontinuierlich abgezogen werden.

2. Verfahren nach Anspruch 1, dadurch gekennzeichnet, daß die im ersten Schmelzbecken (1a) entstehenden Gase in den Oberofen (10) des zweiten Schmelzbeckens (1b) übergeführt und verbrannt werden.

3. Verfahren nach Anspruch 1 oder 2, dadurch gekennzeichnet, daß die in der Schmelze sich bildenden elementaren Metalle zum Boden sinken und über eine steuerbare Dränageöffnung (15) abgezogen werden.

4. Verfahren nach einem der Ansprüche 1 bis 3, dadurch gekennzeichnet, daß die auf dem Schmelzbad schwimmenden Glasgallen noch vor dem Überlauf (4) über einen Seitenkanal (17) abgeführt werden.

5. Verfahren nach einem der Ansprüche 1 bis 4, dadurch gekennzeichnet, daß die aufgeschmolzene glasartige Masse durch einen Speiserkanal gezielt zur Weiterverarbeitung temperaturhomogenisiert wird.

6. Verfahren nach einem der Ansprüche 1 bis 5, dadurch gekennzeichnet, daß die überlaufende Masse in Wasser unter Bildung von Fritte abgeschreckt wird.

7. Verfahren nach einem der Ansprüche 1 bis 6, dadurch gekennzeichnet, daß die überlaufende Masse gezielt durch Gießen in Formen zu bestimmten Produkten wie Bausteinen, Platten od.dgl. verarbeitet wird.

8. Vorrichtung zur Durchführung des Verfahrens nach einem der Ansprüche 1 bis 7, mit einem geschlossenen Schmelzofen mit zwei Schmelzbecken (1a, 1b), mit einem in einer Stirnwand oberhalb des Überlauf-Niveaus liegenden Rohstoffeinlaß (18) und einem vorzugsweise in der gegenüberliegenden Stirnwand angeordneten Auslaß, sowie mit einer elektrischen Heizung (2) in beiden Schmelzbecken (1a, 1b) und einer zusätzlichen Oberflammen-Beheizung (9) im Oberofen des zweiten Schmelzbeckens (1b), dadurch gekennzeichnet, daß der Oberofen des zweiten Schmelzbeckens (1b) mit dem Oberofen des ersten Schmelzbeckens (1a) über eine Verbindungsöffnung (11) verbunden ist.

9. Vorrichtung nach Anspruch 8, gekennzeichnet durch eine in eine der anderen Seitenwände angeordnete Abzugsöffnung (12), der ein Filter und eine Neutralisiersstation nachgeordnet sind.

10. Vorrichtung nach Anspruch 8 oder 9, dadurch gekennzeichnet, daß das zweite Schmelzbecken (1b) über einen abgedeckten Auslaufkanal (3) mit einem beabstandeten Überlauf (4) verbunden ist.

11. Vorrichtung nach Anspruch 10, gekennzeichnet durch eine Oberflammen-Beheizung (13) und/oder Widerstandsbeheizung (14) im Bereich des Auslaufkanals (3).

## Claims

1. Method of safely disposing of environmentally harmful residues, in particular sewage sludge, filter dust, flue dust, slag, and the like by melting together with added substances, characterised in that the dried residues are mixed with solid blast furnace slag or other waste products and are homogenised in a two-part melting furnace with a first melting basin (1a) and a second melting basin (1b) at temperatures of between 1350°C and 1600°C to form a vitreous mass, into which the pollutants are bonded, melted and continuously tapped off via an overflow (4).

2. Method according to claim 1, characterised in that the gases produced in the first melting basin (1a) are passed into the top furnace (10) of the second melting basin (1b) and are burned.

3. Method according to claim 1 or 2, characterised in that the elementary metals forming in the melt sink to the bottom and are tapped off via a controllable drainage aperture (15).

4. Method according to one of claims 1 to 3, characterised in that the galls of glass floating on the melt bath are drained off before the overflow (4) via a side channel (17).

5. Method according to one of claims 1 to 4, characterised in that the molten vitreous mass is directed through a feed channel in a temperature-homogenised state for further processing.

6. Method according to one of claims 1 to 5, characterised in that the overflowing mass is quenched in water to form frit.

7. Method according to one of claims 1 to 6, characterised in that the overflowing mass is processed in a controlled manner into specified products such as bricks, slabs or the like by pouring into moulds.

8. Apparatus for carrying out the method according to one of claims 1 to 7, having a sealed melting furnace with two melting basins (1a, 1b), having a raw material inlet (18) positioned above the overflow level, and an outlet preferably located in the opposite end wall, and having an electric heater (2) in both melting basins (1a, 1b) and an additional top-fire heater (9) in the top furnace of the second melting basin (1b), characterised in that the top furnace of the second melting basin (1b) communicates with the top furnace of the first melting basin (1a) via a connecting aperture (11).

9. Apparatus according to claim 8, characterised by a tapping aperture (12) disposed in the other side wall, with a filter and neutralising bay arranged in series.

10. Apparatus according to claim 8 or 9, characterised in that the second melting basin (1b) is connected to a spaced overflow (4) via a covered outlet channel (3).

11. Apparatus according to claim 10, characterised by a top-fire heater (13) and/or resistance heating (14) in the region of the outlet channel (3).

## Revendications

1. Procédé d'élimination non polluante de résidus nuisibles pour l'environnement, notamment d'une boue de clarification, de la poussière de filtre, de cendres volantes, de scories et analogues, moyennant leur réunion par fusion avec des matières additives, caractérisé en ce qu'on mélange les résidus séchés avec des scories solides de haut fourneau ou avec d'autres déchets et les homogénéise dans un four de fusion divisé en deux parties et comprenant une première cuvette de fusion (1a) et une seconde cuvette de fusion (1b), à des températures comprises entre 1350°C et 1600°C pour former une masse vitreuse, dans laquelle les substances polluantes sont intégrées qu'on les réunit par fusion et les soutire de façon continue par l'intermédiaire d'un trop-plein (4).

2. Procédé selon la revendication 1, caractérisé en ce que les gaz, qui apparaissent dans la première cuvette de fusion (1a), sont transférés dans la partie supérieure (10) du four au niveau de la seconde cuvette de fusion (1b) et sont brûlés.

3. Procédé selon la revendication 1 ou 2, caractérisé en ce que les métaux élémentaires, qui se forment dans la masse fondue, tombent au fond et sont soutirés par l'intermédiaire d'une ouverture de drainage commandable (15).

4. Procédé selon l'une des revendications 1 à 3, caractérisé en ce que les fiels de verre flottant sur le bain de fusion sont encore évacués en amont du trop-plein (4) par l'intermédiaire d'un canal latéral (17).

5. Procédé selon l'une des revendications 1 à 4, caractérisé en ce qu'on réalise l'homogénéisation ciblée de la température de la masse vitreuse fondue traversant un canal d'alimentation, en vue de son traitement ultérieur.

6. Procédé selon l'une des revendications 1 à 5, caractérisé en ce qu'on applique une trempe à la masse qui déborde au niveau du trop-plein, dans de l'eau moyennant la formation d'une fritte.

7. Procédé selon l'une des revendications 1 à 6, caractérisé en ce qu'on traite de façon ciblée la masse de trop-plein par coulée dans des moules pour former des produits déterminés tels que des briques, des plaques ou analogues.

8. Dispositif pour la mise en oeuvre du procédé selon l'une des revendications 1 à 7, comportant un four de fusion fermé comportant deux cuvettes de fusion (1a, 1b), équipé d'une entrée (18) pour les matières premières, qui est aménagée dans une paroi frontale au-dessus du niveau de trop-plein, et une sortie ménagée de préférence dans la paroi frontale opposée, ainsi qu'un dispositif de chauffage électrique (2) situé dans les deux cuvettes de fusion (1a, 1b) et un dispositif supplémentaire (9) de chauffage à la flamme situé dans la partie supérieure du four au niveau de la seconde cuvette de fusion (1b), caractérisé en ce que la partie supérieure du four au niveau de la seconde cuvette de fusion (1b) est reliée à la partie supérieure du four au niveau de la première cuvette de fusion (1a) par l'intermédiaire d'une ouverture de liaison (11).

9. Dispositif selon la revendication 8, caractérisé par une ouverture de soutirage (12), agencée dans l'une des autres parois latérales et en aval de laquelle sont disposés un filtre et un poste de neutralisation.

10. Dispositif selon la revendication 8 ou 9, caractérisé en ce que la seconde cuvette de fusion (1b) est reliée par l'intermédiaire d'un canal de sortie couvert (3) avec un trop-plein (4) situé à distance.

11. Dispositif selon la revendication 10, caractérisé par un dispositif supérieur de chauffage à la flamme (13) et/ou un dispositif de chauffage à résistances (14) au voisinage du canal de sortie (3).
